# EUROPEAN PATENT APPLICATION

(11) **EP 4 550 035 A1**
(43) Date of publication of application: **07.05.2025**
(21) Application number: 23207033.4
(22) Date of filing: 31.10.2023

(54) **OPTICAL WAVEGUIDE MODULATOR**

(71) Applicant: Nokia Solutions and Networks Oy, 02610 Espoo (FI)
(72) Inventor: AIMONE, Alessandro, 10179 Berlin (DE)
(74) Representative: Nokia EPO representatives

(57) **Abstract**

A planar electro-optic modulator disposed along a surface of a substrate includes an optical waveguide and two or more drive electrodes. The optical waveguide is disposed along the surface and comprises a series of segments and one or more bends, each of the bends endconnecting a pair of the segments such that in operation light propagates in opposite directions in different ones of the segments of the pair. The two or more drive electrodes extend along the surface transverse to the segments. Each of the drive electrodes has a plurality of metallic stubs connected thereto, at least some of the stubs extending along adjacent ones of the segments.

## Description

### TECHNICAL FIELD

The present invention relates to integrated electro-optical modulators.

### BACKGROUND

Data center interconnects and broad-band telecom networks make use of optical communication modules to process the high data rates of internet traffic. Optical transceiver (TRx) capable of high data rates typically use Mach-Zehnder modulators (MZMs) having RF-driven electro-optical phase modulators in each waveguide arm. A thin-film LN (TFLN) modulator combining superior electro-optic properties of LN with silicon photonics (SiP) may be implemented in an opto-electronic chip as a photonic integrated circuit (PIC). Advantageously, SiP can utilize mature CMOS processes to fabricate highly integrated optical circuits on a silicon substrate, allowing SiP chips to be mass produced at relatively low cost. Using thin-film optical materials having a large Pockels effect, such as e.g. thin-film lithium niobate (LiNbO3, "LN"), in the waveguide arms of an MZM enables providing data rates in excess of 100 Giga-bit/second (Gbs) while controlling for power consumption. Still, the physical size of thin-film LiNbO3 modulators, which may be up to several centimeters long, can limit how compact an optical transceiver can be.

### SUMMARY

Embodiments described herein relate to optical waveguide modulators utilizing an electro-optic material in waveguide arms thereof.

According to an example embodiment, provided is an apparatus. The apparatus includes a planar electro-optic (EO) modulator disposed along a surface of a substrate and comprising an optical waveguide and two or more drive electrodes. The optical waveguide is disposed along the surface and comprises a series of segments and one or more bends, each of the bends end-connecting a pair of the segments such that in operation light propagates in opposite directions in different ones of the segments of the pair. The two or more drive electrodes extend along the surface transverse to the segments. Each of the drive electrodes has a plurality of metallic stubs connected thereto, at least some of the stubs extending along adjacent ones of the segments..

In some implementations, adjacent ones of the stubs may be connected to different ones of the drive electrodes. In some implementations, at least one of the drive electrodes may be approximately perpendicular to at least one of the segments. In any of the above implementations, the optical waveguide may be an arm of an optical Mach-Zehnder modulator (MZM). In any of the above implementations, the segments may comprise thin-film LiNbO₃.

### BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:
FIG. 1 is a schematic plan view of a folded optical waveguide modulator having three optical waveguide segments end-connected by two waveguide U-bends, two drive electrodes extending thereacross, and a plurality of metallic stubs projecting from the drive electrodes alongside corresponding ones of the waveguide segments;
FIG. 2 is a schematic plan view of a folded optical waveguide modulator having three optical waveguide segments end-connected by two waveguide U-bends, three drive electrodes extending thereacross, and a plurality of metallic stubs projecting from the drive electrodes alongside corresponding ones of the waveguide segments;
FIG. 3 is a schematic plan view of an optical waveguide MZM with once-folded optical waveguide arms, a plurality of metallic stubs extending adjacent corresponding segments of the optical waveguide arms, and two drive electrodes extending across the segments and connected to the stubs;
FIG. 4 is a schematic plan view of a modification of the optical waveguide MZM of FIG. 3 having twice-folded optical waveguide arms;
FIG. 5 is a schematic plan view of a modification of the optical waveguide MZM of FIG. 4 having three drive electrodes extending across straight segments of the optical waveguide arms;
FIG. 6 is schematic plan view of an N-folded optical waveguide MZM having three drive electrodes extending across straight segments of the MZM arms.

### DETAILED DESCRIPTION OF SOME SPECIFIC EMBODIMENTS

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Furthermore, the following abbreviations and acronyms may be used in the present document:
"CMOS" Complementary Metal-Oxide-Semiconductor
"EO" electro-optic
"Si" Silicon
"MZM" Mach-Zehnder Modulator
"LN" Lithium Niobate
"PIC" Photonic Integrated Circuit
"RI" Refractive Index
"SOI" Silicon on Insulator
"SiP" Silicon Photonics
"RF" Radio Frequency
"DC" Direct Current
"TW" Travelling Wave

Note that as used herein, the terms "first", "second", and so forth are not intended to imply sequential ordering, but rather are intended to distinguish one element from another, unless explicitly stated. Similarly, sequential ordering of method steps does not imply a requirement of sequential order of their execution, unless explicitly stated. The term "vertical" refers to a direction generally perpendicular to a surface of the substrate along which relevant integrated circuitry is disposed. The term "horizontal" refers to a direction along the surface of the substrate.

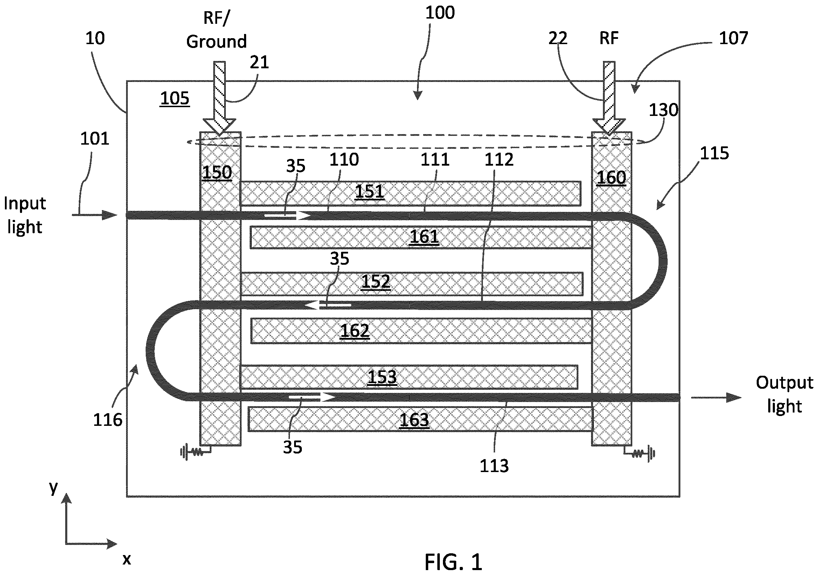

FIG. 1 schematically illustrates, in a plan view, an example electro-optic (EO) waveguide modulator 100 ("modulator 100") disposed in a chip 10 along a surface 107 of a substrate 105. The substrate 105 may be a single-layer or multi-layer structure, whose surface 107 is roughly or substantially planar. The substrate 105 may be, for example, a silicon substrate or a silicon-on-insulator (SOI) substrate. The modulator 100 includes an optical waveguide 110 disposed along the surface 107. In the illustrated example, the modulator 100 has a "folded" configuration and includes two U-shaped bends, 115 and 116, end-connecting corresponding optical waveguide segments 111, 112, and 113 of the optical waveguide 110. The folded configuration of the waveguide 110 allows to reduce the length of the chip 10. The segments 111, 112, and 113 may be straight or roughly straight. The bends 115 and 116 are such that light 101 that enters the waveguide 110 from an input end thereof propagates in opposite directions in consecutive ones of the segments, as schematically illustrated by arrows 35. "Opposite directions" here mean directions toward about opposite sides of the chip 10 (opposite sides of the substrate 105). The optical waveguide 110, at least in the segments 111-113 thereof, has an optical waveguide core comprising, typically, suitable electro-optic (EO) material exhibiting Pockels effect, such as lithium niobate (LiNbO₃, "LN"), e.g. thin-film LN.

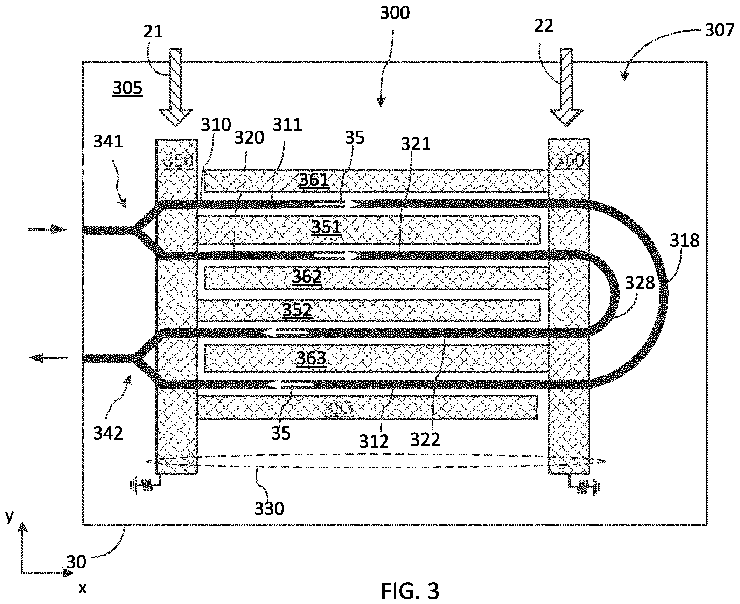

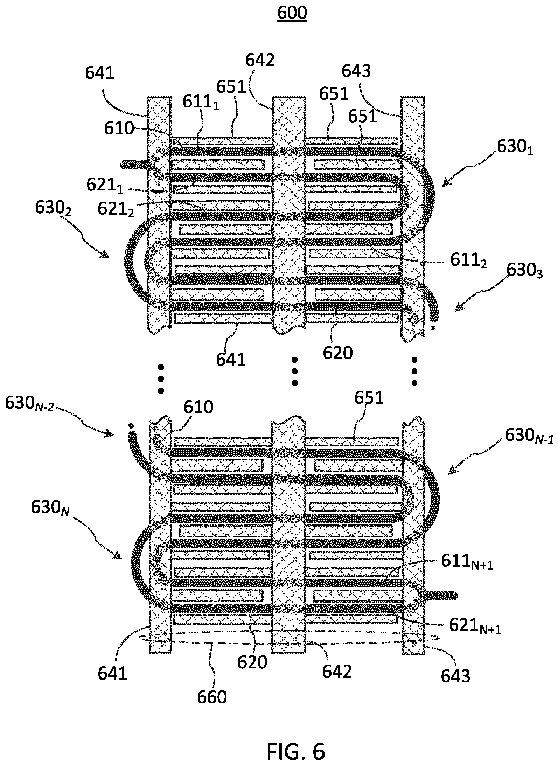

In the illustrated example the bends 115 and 116 are approximately 180° degree bends, which facilitates a more compact footprint. Implementations with at least one of the bends differing from 180° may also be contemplated, with the corresponding bend angle being e.g. in a range from about 140° to about 180°. Each of the bends 115, 116 may include a sequence of smaller-angle bends. Other implementations may include e.g. just one bend (e.g. 115) of approximately 180° end-connecting two optical waveguide segments of the waveguide 110, e.g. 111 and 112, with both ends of the waveguide 110 terminating at a same side of the chip 10 (see e.g. optical waveguide 310 in FIG. 3). In some implementations, the optical waveguide 110 may include three or more U-shaped waveguide bends ("waveguide folds"), as illustrated in FIG. 6.

The modulator 100 further includes two drive electrodes 150 and 160 disposed transverse, e.g. approximately perpendicular, to the light propagation directions in the optical waveguide segments 111-113 driven thereby. The drive electrodes may be disposed in a different layer than the optical waveguide 110, e.g. overlaying the optical waveguide 110.

The drive electrodes 150 and 160 may form an RF electrical transmission line 130 that supports propagation there along of an RF modulation signal or signals provided at one end thereof, e.g. as illustrated by arrows 21 or 22. The drive electrode(s) 150 and/or 160 may have one end adopted to receive an RF drive signal, e.g. 21 and/or 22, from an RF driver circuit (not shown). The distal end(s) of the drive electrode(s) 150 and/or 160 may be electrically terminated in order to, at least, partially suppress back reflections of the RF signal therefrom, or even to totally suppress such back reflections. For example, such an electrical termination may be a matched electrical connection to a chip ground, as schematically illustrated in FIG. 1 by way of example, or to a DC source.

In the illustrated example, the drive electrodes 150 and 160 are TW electrodes that are suitably terminated at the distal ends thereof. Further in the illustrated example, the drive electrodes 150 and 160 are approximately perpendicular to the segments 111-113, i.e. oriented at an angle with respect to the light propagation direction in the segment 111 of 90° ± 10°. Implementations in which at least one of the electrodes 150 and 160 is somewhat inclined relative to a perpendicular to an axial direction in the optical waveguide segment 111, i.e. oriented at an angle in a range of 90° ± 45° with respect to the light propagation direction in the segment 111 are, may also be contemplated.

A plurality of conducting, preferably metallic, stubs 151-153, 161-163 are provided along the surface 107, and are electrically connected to corresponding ones of the drive electrodes 150 and 160. The stubs 151-153, 161-163 extend along respective ones of the optical waveguide segments 111-113 to drive the modulation of light propagating therein. The stubs 151-153, 161-163 may be disposed, e.g. in a same layer with the optical waveguide 110, or in a layer somewhat vertically offset therefrom.

Each of the segments 111-113 is between a pair of adjacent ones of the stubs, as illustrated in FIG. 1, e.g. the segment 111 being between and along the pair of adjacent stubs 151 and 161, the segment 112 being between and along the stubs 152 and 162, the segment 113 being between and along the stubs 153 and 163. Applying a voltage between e.g. the pair of stubs 151 and 161, or the pair of stubs 152 and 162, or the pair of stubs 153 and 163, induces an electrical field in the optical waveguide core of the corresponding one of the segments 111, 112, and 113, the induced electrical fields drive modulation of the RI of said segments.

Stubs adjacent to a same one of the segments 111, 112, or 113, e.g. stubs 151 and 161 at opposite sides of the segment 111, or stubs 152 and 162 at opposite sides of the segment 112, are connected to different ones of the drive electrodes 150 and 160. Furthermore, in the illustrated configuration, each pair of adjacent stabs, e.g. stubs 161 and 152, are connected to different ones of the drive electrodes 150 and 160.

The optical waveguide and electrode arrangement illustrated in FIG. 1 may be advantageous, e.g. when modulating relatively long lengths of optical waveguides using the Pockels effect, i.e. when the refractive index (RI) of the waveguide core changes linearly with the applied electric field (E-field), and thus the change in the RI depends on the E-field direction. In such modulators, the folded form of the optical waveguide being modulated, e.g. as illustrated in FIG. 1, advantageously allows reducing the length of the modulator chip 10. In such a "folded" configuration, having TW drive electrodes extending along segments of the optical waveguide being modulated would require multiple electrode bends and electrode - electrode crossings to preserve the E-field direction between adjacent, approximately parallel optical waveguide segments.

Contrary to that conventional design with TW electrodes extending alongside the optical waveguide being modulated, light in the waveguide 110 of the modulator 100 of FIG. 1 is modulated by a series of the conducting stubs 151-153, 161-163 along the surface of the substrate 105, which are connected in an alternating manner to the TW drive electrodes 150 and 160. This preserves the direction of the E-field across different ones of the optical waveguide segments without requiring any electrode-electrode crossings or electrode bends. In this configuration, the TW drive electrodes, e.g. 150 and 160, are oriented transversely to the waveguide segments rather than along thereof, and their primary function is to deliver the RF modulation signal to different ones of the stubs 151-153, 161-163 in a timely fashion.

The TW drive electrodes 150, 160 may be configured to match the propagation velocity of the RF signals 21, 22 therealong to that of the propagation speed of light 101 in the optical modulator 100 in the direction along the TW drive electrodes, i.e. along the y-axis in FIG. 1. The series of stubs 151-153 and 161-163 provide capacitive loading of the TW drive electrodes 150 and 160, reducing the propagation velocity of the RF modulation signals 21, 22 therealong. In some embodiments, the TW drive electrodes 150, 160 may be additionally capacitively loaded to suitably adjust the propagation velocity of the RF signals therealong.

The stubs 151-153, 161-163 may operate substantially as lumped electrodes in the operating RF range of the modulator 100, i.e. modulating the light in one of the waveguide segments 111-113 at different locations along the stub approximately in-phase. In some embodiments, the stubs 151-153, 161-163 may be shorter than the TW electrodes 150, 160, and may be shorter than the smallest operating RF wavelength λ_{RFmin} of the modulator 100. In some embodiments, an electric length of one or more of the stubs 151-153, 161-163 may be about equal to λ_{RF}/4, or an integer multiple thereof, where λ_{RF} is the wavelength of an RF signal of a frequency *f*_{RF} within the operating frequency range of the modulator 100.

In some embodiments, the modulator 100 may be operated using a ground-signal ("G-*S*") modulation scheme, in which one of the drive electrodes 150 and 160, e.g. 150, is a "ground" electrode. An RF modulation signal 22 is applied to the other drive electrode, e.g. 160, which is a signal electrode in this scheme. In other embodiments both drive electrodes 150 are TW signal electrodes, with the RF signals 21 and 22 applied thereto are complementary and form a differential signal pair (*S*-*S̅* driving scheme). The RF transmission line 130 formed by the TW electrodes 150 and 160 may be configured to suitably match the delay times of the RF modulation signal(s) 21 and/or 22 between consecutive pairs of stubs connected to said electrodes, e.g. 151/161 and 152/162, to the propagation time of the light 101 in a corresponding section of the optical waveguide 110 (e.g. from the middle of the waveguide segment 111 to the middle of the waveguide segment 112).

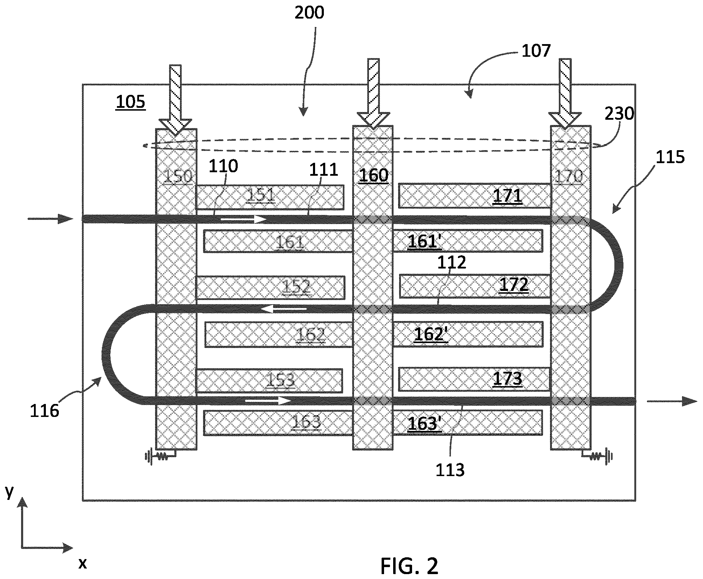

FIG. 2 schematically illustrates a layout of an optical waveguide modulator 200 ("modulator 200") according to another example. The modulator 200 is a modification of the modulator 100, which includes a third drive electrode 170 at some distance from the drive electrode 160. Elements that are common to the modulators 100 and 200 are indicated in FIGs. 1 and 2 with same reference numerals, and may not be described here again. The drive electrodes 150, 160, 170 may form an electrical RF transmission line 230. The drive electrode 160 in this example extends across the middle of the segments 111-113. In this example, the first two sets of conducting stubs, 151-153 and 161-163, extend along corresponding first length portions of the optical waveguide segments 111-113, to modulate the RI thereof, e.g. along about half of the segments' lengths. The plurality of conducting stubs of the modulator 200 further includes a second set of stubs 161'-163' projecting from the middle drive electrode 160 toward the third drive electrode 170, and a third set of conducting stubs 171, 172, 173 projecting from the third drive electrode 170 toward the middle drive electrode 150. These two sets of conducting stubs, 161'-163' and 171-173, extend along corresponding second length portions of the waveguide segments 111-113, to modulate the RI thereof, e.g. along about the other half of the segments' lengths. In various embodiments, the modulator 200 may be driven using one of a S-G-S, S-9-S, or G-S-G modulation schemes, by applying one of the corresponding RF drive signals and/or ground to the drive electrodes 150, 160, 170.

In the examples of FIGs. 1 and 2, the modulators 100 and 200 are substantially optical phase modulators, in which the RF modulation signal or signals modulate the optical phase of the light 101 propagating along the optical waveguide 110. In other embodiments, the optical waveguide 110 may be one arm of an optical waveguide Mach-Zehnder modulator (MZM), the MZM further including a second optical waveguide extending along the first optical waveguide 110 to form a second arm of the MZM, and a second plurality of conducting stubs connected to the same TW electrodes to modulate light in the second optical waveguide. Examples of such MZMs are illustrated in FIGs. 3, 4, 5, and 6.

Referring to FIG. 3, an optical waveguide MZM 300 ("modulator 300") includes a pair of optical waveguide arms 310, 320 disposed along the surface 307 of the substrate 305 of a chip 30. The chip 30, the substrate 305, and the surface 307 may be as described above with reference to the chip 10, the substrate 105, and the surface 107 of FIG. 1. The optical waveguide arms 310, 320 are connected between an optical splitter 341 and an optical combiner 342. In operation, light received at an input of the optical splitter 341 is split by the optical splitter 341 in two parts, which propagate along the waveguide arms 310, 320 to be recombined by the optical combiner 342. Each of the optical waveguide arms 310, 320 includes two optical segments, i.e., the two segments 311 and 312 and the two sequential segments 321 and 322 respectively, connected by a corresponding U-shaped optical waveguides, 318 and 328 respectively, so that light propagates in the two optical segments 311, 321 in a direction opposite to the light propagating in the segments 312 and 322, as schematically indicated with white arrows 35 in FIG. 3. The optical waveguide arms 310, 320 have each an optical waveguide core that comprises, at least in the waveguide segments 311, 321, 312, and 322, an EO reactive material along the substrate surface 307, such as but not exclusively thin-film LN.

Two drive electrodes 350, 360, which may form an RF transmission line 330, extend along a direction transverse, e.g. about perpendicular, to the optical waveguide segments 311, 312, 321, 322. The two drive electrodes 350, 360 may form an RF transmission line 330 to guide RF signal(s) there along. Conducting stubs 351-353 and 361-363 are located along opposite sides of the optical waveguide segments 311, 321, 312, and 322, with adjacently-located ones of the stubs being electrically connected to different ones of the drive electrodes 350, 360. This stub arrangement enables push-pull modulation of light propagating in the pairs of corresponding optical waveguide segments 311, 321 and 312, 322. The drive electrodes 350, 360 and the stubs 351-353, 361-363 may be as described above with reference to the drive electrodes 150, 160 and the stubs 151-153, 161-163, respectively.

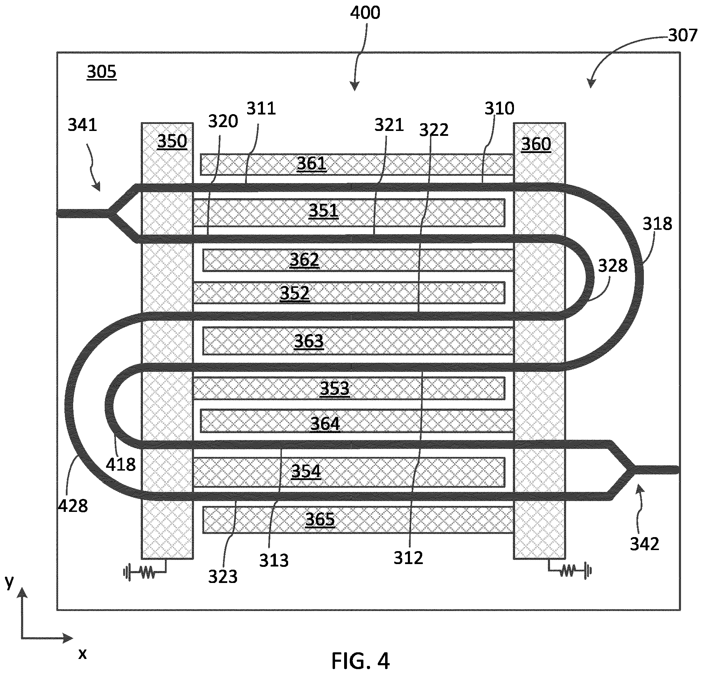

FIG. 4 schematically illustrates a layout of an optical waveguide MZM 400 ("modulator 400") according to another example. Elements that are common to the modulators 300 and 400 are indicated in FIGs. 3 and 4 with same reference numerals, and may not be described here again. The modulator 400 is a modification of the modulator 300 with each of the optical waveguide arms 310, 320 having an additional U-shaped waveguide bend 418 and 428, respectively, and a corresponding third waveguide segment 313, 323. Three more conducting stubs 364, 354, and 365 are added to modulate light in the third waveguide segments 313 and 323. The conducting stubs 364, 354, and 365 alternately connect to corresponding ones of the TW electrodes 350 and 360.

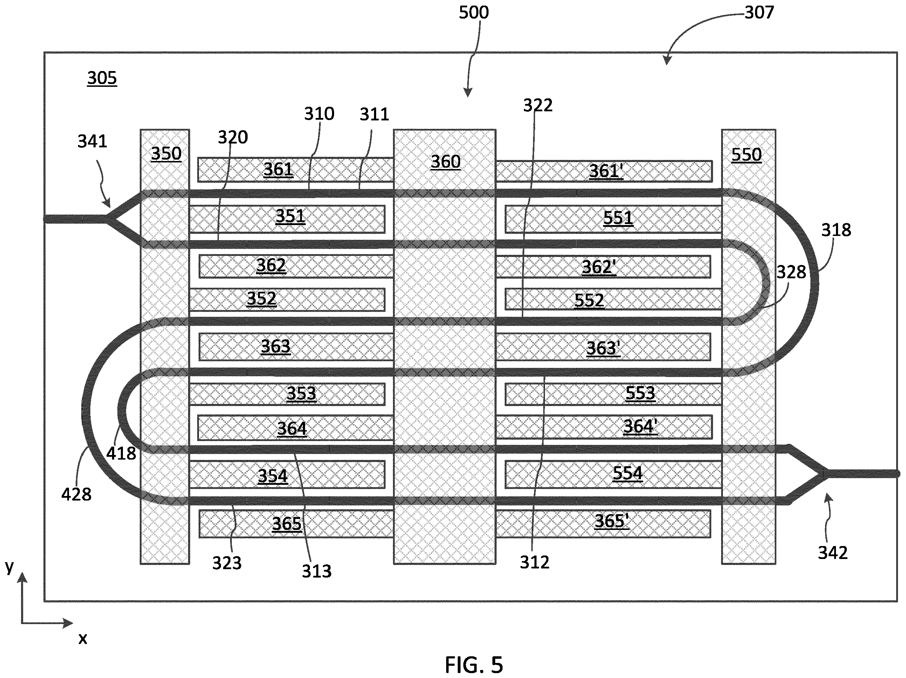

FIG. 5 schematically illustrates a layout of an optical waveguide modulator 500 ("modulator 500") according to another example. Elements that are common to the modulators 400 and 500 are indicated in FIGs. 4 and 5 with same reference numerals, and may not be described here again. The modulator 500 is an MZM and is a modification of the modulator 400 having a third drive electrode 550 at an opposite side of the drive electrode 360 from the drive electrode 350.. In this example, the drive electrode 360 crosses the optical waveguide segments 311, 321, 312, 322, 313, 323 about in the middle thereof, and has two sets of conducting stubs, 361-365 and 361'-365', projecting therefrom in opposite directions along corresponding ones of the optical waveguide segments 311, 321, 312, 322, 313, 323 toward the drive electrodes 350 and 550, respectively. Another set of conducting stubs, 551-554, is connected to the third drive electrode 550 projecting therefrom toward the middle drive electrode 360 along corresponding ones of the waveguide segments 311-313 and 321-323. In this example, different sets of conducting stubs are disposed along different length portions of the corresponding waveguide segments 310, 320 to modulate the RI thereof. In various embodiments, the modulator 500 may be driven using one of a S-G-S, S-9-S, or G-S-G modulation schemes.

FIG. 6 schematically illustrates an A-folded optical waveguide MZM 600 having a pair of optical waveguide arms 610, 620 ("MZM arms") and three drive electrodes, 641, 642, 643. The pair of optical waveguide arms 610, 620 has N folds, or U-shape bends, 630₁, 630₂, 630₃, ..., 630_{*N*-2}, 630_{*N*-1}, 630*_{N}*, which connect (*N*+1) segments 611₁, ... , 611_{N+1}, and 621₁, ... , 621_{N+1}, of the pair of arms 610, 620. The segments 611₁, ... , 611_{N+1}, and 621₁, ... , 621_{N+1} are typically approximately straight. In the illustrated example *N* > 6; in various implementations, the number *N* of folds may typically range from about 5 to about 25, but may be in a range from 1 to about 40 in some embodiments. The three drive electrodes 641, 642, and 643, which may form an RF transmission line 660, extend transverse to the between-folds segments 611*ₙ* and 621*ₙ*, of the MZM arms 610, 620, e.g. approximately perpendicular thereto. The modulation of light in the waveguide arms 610, 620 is driven by pairs of metallic stubs 651 that are connected to the drive electrodes 641-643 in alternating manner and extend along opposite sides of the approximately straight segments of the waveguide arms 610, 620 adjacent thereto, as described above with reference to FIGs. 1-5. By way of example, the length of each stub 651 may be in the 100-200 micrometer (µm) range, and the length of the waveguide arms 610, 620 may be typically from about 0.5 to about 2 centimeters (cm).

Potential advantages of the electrode configurations described herein for optical waveguide modulators using optical waveguides with electro-optic material in the optical waveguide cores thereof include, apart from the reduced modulator length and more favorable form-factor, may include the ability to adjust several design parameters of the electrodes, such as the length of the stubs and the number of the stubs along each waveguide segment, a relaxed electrical - to - optical velocity matching requirement, the absence of electrode crossings and optical waveguide crossings, and/or decorrelation between the periodic capacitive loading and the modulator length.

According to an example embodiment disclosed above, e.g., in the summary section and/or in reference to any one or any combination of some or all of FIGs. 1-6, provided is an apparatus comprising a planar EO modulator (e.g. 100, 200, 300, 400, 500, 600). The planar EO modulator is disposed along a surface (e.g. 107, FIGs. 1, 2; 307, FIGs. 3-5) of a substrate (e.g. 105, FIGs. 1, 2; 305, FIGs. 3-5) and comprises an optical waveguide (e.g. 110, FIGs. 1, 2; 310 FIGs. 3-5; 610, FIG. 6) and two or more drive electrodes (e.g. 150, 160, FIG. 1; 150, 160, 170, FIG. 2; 350, 360, FIGs. 3, 4; 350, 360, 550, FIG. 5; 641, 642, 643, FIG. 6). The optical waveguide is disposed along the surface and comprises a series of segments (e.g. 111, 112, 113, FIGs. 1, 2; 311, 312, FIG. 3; 311, 312, 313, FIGs. 4 and 5; 611₁, 611₂,..., FIG. 6); and one or more bends (e.g. 115, 116, FIGs. 1, 2; 318, FIG. 3; 318, 418, FIGs. 4 and 5), each of the bends end-connecting a pair (e.g. 111, 112, FIG. 1) of the segments such that in operation light propagates in opposite directions (e.g. 35 in FIG. 1) in different ones (e.g. 111 and 112, FIG. 1) of the segments of the pair. The two or more drive electrodes extend along the surface transverse to the segments. Each of the drive electrodes has a plurality of metallic stubs (e.g. 151-153, 161-163, FIGs. 1, 2; 161'-163' and 171-173, FIG. 2; 351-353 and 361-363, FIG. 3; 351-354, 361-365, FIGs. 4, 5; 551-554 and 361'-365', FIG. 5; 651, FIG. 6) connected thereto, at least some of the stubs (e.g. 351, 361, FIGs. 3, 4) extending along adjacent ones (e.g. 311, FIGs. 3, 4) of the segments.

In some implementations, adjacent ones of the stubs (e.g. 151, 161, FIGs. 1, 2) are end-connected to different ones (e.g. 150, 160, FIGs. 1, 2) of the drive electrodes.

In any of the above implementations, each of the segments may be between a pair of adjacent ones of the stubs end-connected to different ones of the drive electrodes.

In any of the above implementations, the series may comprise at least 3 of the segments (e.g. 111, 112, 113, FIGs. 1, 2; 311, 312, 313, FIGs. 4 and 5; 611₁, 611₂,... 611_{*N*+1}, FIG. 6), and the one or more bends may comprise at least two of the bends (e.g. 115, 116, FIGs. 1, 2; 318, 418, FIGs. 4 and 5).

In any of the above implementations, the two or more drive electrodes may comprise three of the drive electrodes (e.g. 150, 160, 170, FIG. 2; 350, 360, 550, FIG. 5; 641, 642, 643, FIG. 6).

In any of the above implementations, at least one of the two or more drive electrodes (e.g. 150, FIGs. 1,2) is substantially perpendicular to at least one of the segments (e.g. 111, FIGs. 1, 2).

In any of the above implementations, the two or more drive electrodes (e.g. 150, 160, FIG. 1; 150, 160, 170, FIG. 2; 350, 360, FIG. 3; 641, 642, 643, FIG. 6) comprise an electrical transmission line (e.g. 130, FIG. 1; 230, FIG. 2; 330, FIG. 3; 660, FIG. 6).

In any of the above implementations, the optical waveguide (e.g. 610) may comprise at least 6 segments (e.g. 611₁, 611₂, ..., 611_{*N*+1}, FIG. 6).

In any of the above implementations, a least some of the stubs may be about 100 micrometers to 200 micrometers long.

In any of the above implementations, the EO modulator (e.g. 300, 400, 500, 600) is a Mach-Zehnder modulator (MZM) comprising a second optical waveguide (e.g. 320, FIGs. 3-5, 620, FIG. 6) having a second series of end-connected segments (e.g. 321 and 322, FIG. 3; 321-323, FIGs. 4 and 5; 621₁, 621₂,..., 621_{N+1}, FIG. 6), each segment of the second series extending along an adjacent one of the segments of the first series, said optical waveguides being connected to receive light in parallel from an optical splitter (e.g. 341, FIGs. 3-5). In some of such implementations, each of the segments of the second optical waveguide is located between a pair of the stubs end-connected to different ones of the drive electrodes.

In any of the above implementations, the segments may comprise thin-film LiNbO₃.

The examples of electro-optical waveguide modulators and electrode configurations thereof described above are not intended to be limiting, and many variations will become apparent to a skilled reader having the benefit of the present disclosure.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims. Various features described above with reference to a specific embodiment or embodiments may be combined with other embodiments.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

## Claims

1. An apparatus comprising:
a planar electro-optic (EO) modulator disposed along a surface of a substrate and comprising:
an optical waveguide being disposed along the surface and comprising a series of segments and one or more bends, each of the bends end-connecting a pair of the segments such that in operation light propagates in opposite directions in different ones of the segments of the pair; and
two or more drive electrodes extending along the surface transverse to the segments; each of the drive electrodes having a plurality of metallic stubs connected thereto, at least some of the stubs extending along adjacent ones of the segments.

2. The apparatus of claim 1, wherein adjacent ones of the stubs are end-connected to different ones of the drive electrodes.

3. The apparatus of claim 1 or 2, wherein each of the segments is between a pair of adjacent ones of the stubs end-connected to different ones of the drive electrodes.

4. The apparatus of any one of claims 1 to 3, wherein the series comprises at least 3 of the segments and the one or more bends comprises at least two of the bends.

5. The apparatus of any one of claims 1 to 4 wherein the two or more drive electrodes comprise three of the drive electrodes.

6. The apparatus of any one of claims 1 to 5 wherein at least one of the two or more drive electrodes is substantially perpendicular to at least one of the segments.

7. The apparatus of any one of claims 1 to 6 wherein the two or more drive electrodes comprise an electrical transmission line.

8. The apparatus of any one of claims 1 to 7, wherein the optical waveguide comprises at least 6 segments.

9. The apparatus of any one of claims 1 to 8 wherein at least some of the stubs are about 100 micrometers to 200 micrometers long.

10. The apparatus of any one of claims 1 to 9 wherein the EO modulator is a Mach-Zehnder modulator (MZM) comprising a second optical waveguide having a second series of end-connected segments, each segment of the second series extending along an adjacent one of the segments of the first series, said optical waveguides being connected to receive light in parallel from an optical splitter.

11. The apparatus of claim 10 wherein each of the segments of the second optical waveguide is located between a pair of the stubs end-connected to different ones of the drive electrodes.

12. The apparatus of any one of claims 1 to 11, wherein the segments comprise thin-film LiNbO₃.

## Amended claims

### Amended claims in accordance with Rule 137(2) EPC.

1. An apparatus comprising:
a planar electro-optic (EO) modulator (100; 200; 300; 400; 500; 600) disposed along a surface (107) of a substrate (105) and comprising:
an optical waveguide (110) disposed along the surface and comprising a series of segments (111, 112, 113) and one or more bends (115, 116), each of the bends end-connecting a pair of the segments such that in operation light (101) propagates in opposite directions in different ones of the segments of the pair; and
two or more drive electrodes (150, 160; 350, 360);
**characterized in that** the two or more drive electrodes extend along the surface transverse to the segments; each of the drive electrodes having a plurality of metallic stubs (151, 152; 161, 163) connected thereto, at least some of the stubs extending along adjacent ones of the segments.

2. The apparatus of claim 1, wherein adjacent ones of the stubs are end-connected to different ones of the drive electrodes.

3. The apparatus of claim 1 or 2, wherein each of the segments is between a pair of adjacent ones of the stubs end-connected to different ones of the drive electrodes.

4. The apparatus of any one of claims 1 to 3, wherein the series comprises at least 3 of the segments and the one or more bends comprises at least two of the bends.

5. The apparatus of any one of claims 1 to 4 wherein the two or more drive electrodes comprise three of the drive electrodes.

6. The apparatus of any one of claims 1 to 5 wherein at least one of the two or more drive electrodes is substantially perpendicular to at least one of the segments.

7. The apparatus of any one of claims 1 to 6, wherein the two or more drive electrodes (150, 160; 350, 360) are travelling wave, TW, drive electrodes that are suitably terminated at the distal ends thereof.

8. The apparatus of any one of claims 1 to 7 wherein the two or more drive electrodes (150, 160; 350, 360) comprise an electrical transmission line (130).

9. The apparatus of claim 8 wherein the electrical transmission line (130) supports propagation there along of an RF modulation signal or signals provided at one end thereof.

10. The apparatus of claim 9 wherein the two or more drive electrodes have one end adapted to receive an RF drive signal (21, 22) from an RF driver circuit.

11. The apparatus of claim 10 wherein the distal ends of the drive electrodes (150, 160; 350, 360) are electrically terminated in order to, at least, partially suppress back reflections of the RF signal therefrom.

12. The apparatus of any one of claims 1 to 11, wherein the optical waveguide comprises at least 6 segments.

13. The apparatus of any one of claims 1 to 12 wherein at least some of the stubs are about 100 micrometers to 200 micrometers long.

14. The apparatus of any one of claims 1 to 13 wherein the EO modulator (300; 400; 500); is a Mach-Zehnder modulator (MZM) comprising a second optical waveguide (320; 620) having a second series of end-connected segments, each segment of the second series extending along an adjacent one of the segments of the first series, said optical waveguides being connected to receive light in parallel from an optical splitter.

15. The apparatus of claim 14 wherein each of the segments of the second optical waveguide is located between a pair of the stubs end-connected to different ones of the drive electrodes.

16. The apparatus of any one of claims 1 to 15, wherein the segments comprise thin-film LiNbO₃.
